# EUROPÄISCHE PATENTSCHRIFT

(11) **EP 2 334 954 B1**
(45) Veröffentlichungstag und Bekanntmachung des Hinweises auf die Patenterteilung: **20.08.2014**
(21) Anmeldenummer: 09778265.0
(22) Anmeldetag: 02.09.2009
(51) Int. Cl.: F16H 48/06

(54) **ACHSGETRIEBE**
AXLE DRIVE
ENTRAÎNEMENT D'ESSIEU

(30) Priorität: 15.10.2008 DE 102008051699
(43) Veröffentlichungstag der Anmeldung: 22.06.2011
(73) Patentinhaber: Bayerische Motoren Werke Aktiengesellschaft, 80809 München (DE)
(72) Erfinder: FABIAN, Karsten, 85764 Oberschleissheim (DE)
(86) Internationale Anmeldenummer: PCT/EP2009/006339
(87) Internationale Veröffentlichungsnummer: WO 2010/043286

(56) Entgegenhaltungen:
- DE-A1- 4 317 073
- DE-A1-102005 050 752
- DE-A1-102006 062 200
- DE-A1-102008 017 221
- US-A- 2 762 240
- US-A1- 2008 227 581
- JOHANNES LOOMAN: '7. Verteilgetriebe, Achsgetriebe [Auszug]' ZAHNRADGETRIEBE 01 Januar 1970, Seite 226, XP009175562
- ANONYMOUS: 'Differentialgetriebe - Wikipedia', [Online] 11 Oktober 2008, XP055096792 Gefunden im Internet: <URL:http://de.wikipedia.org/w/index.php?ti tle=Differentialgetriebe&oldid=51735930> [gefunden am 2014-01-16]

## Beschreibung

Die vorliegende Erfindung betrifft ein Achsgetriebe gemäß dem Oberbegriff des Patentanspruches 1.

Ein derartiges Achsgetriebe ist aus der US 2 762 240 A bekannt. Zum relevanten Stand der Technik zählen ferner die DE 10 2006 062 200 A1, US 2008/227581 A1, DE 10 2005 050 752 A1, DE 10 2008 017 221 A1, sowie die DE 43 17 073 A1 oder die Hinterachse, die in Abb. 7.36 im Buch "Zahnradgetriebe" von Johannes Looman, Springer-Verlag, Berlin, Heidelberg, New York (1970) gezeigt ist und die Merkmale des Oberbegriffs des Anspruchs 1 enthält; XP 009175562.

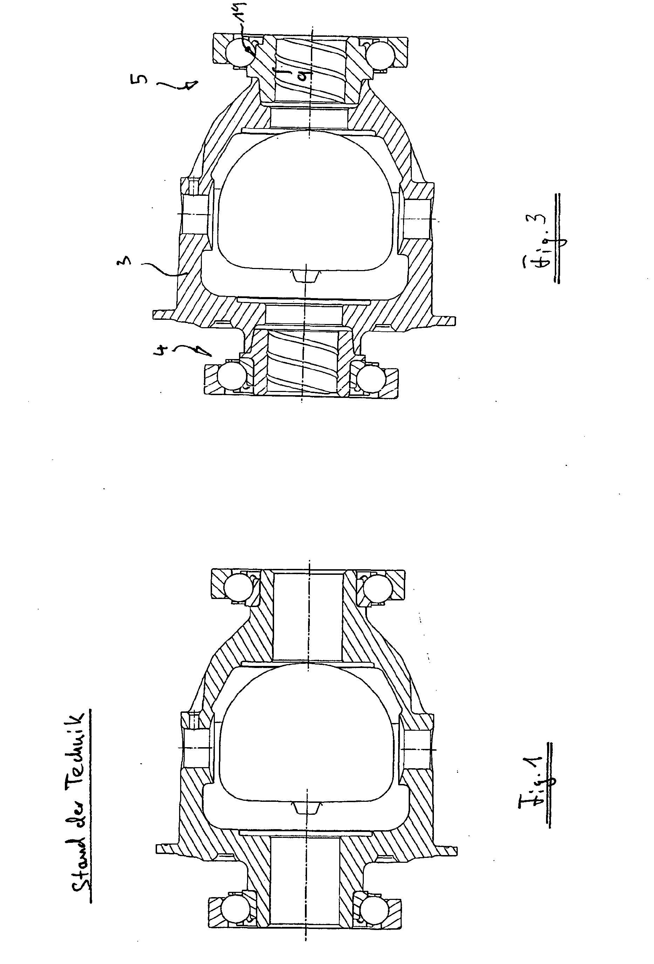

Achsgetriebe weisen ein Achsgetriebegehäuse auf, in dem ein Ausgleichsgetriebegehäuse, das im Folgenden als "Ausgleichsgetriebekorb" bezeichnet wird, über ein linkes und ein rechtes Wälzlager drehbar gelagert ist. Bei Achsgetrieben nach dem Stand der Technik (vgl. Fig. 1) sind die Innenringe der beiden Wälzlager üblicherweise auf den Ausgleichsgetriebekorb aufgepresst. Für die Anordnung der beiden Wälzlager muss auf der linken und auf der rechten Seite des Ausgleichsgetriebekorbs ein entsprechender Lagersitz vorgehalten werden, was Bauraum beansprucht. Diese, für die Anordnung der beiden Wälzlager erforderliche "zusätzliche Breite" erschwert den Einbau des Ausgleichsgetriebekorbs in das Achsgetriebegehäuse und macht eine relativ große Zugangsöffnung im Achsgetriebegehäuse erforderlich.

Aufgabe der Erfindung ist es, ein Achsgetriebe zu schaffen, das eine kompakte Bauweise aufweist und bei dem der Ausgleichsgetriebekorb einfacher als bei herkömmlichen Achsgetrieben montierbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Achsgetriebe, mit einem Achsgetriebegehäuse und einem darin drehbar gelagerten Ausgleichsgetriebekorb. Der Ausgleichsgetriebekorb ist mittels eines linken und eines rechten Wälzlagers in dem Achsgetriebegehäuse gelagert. Hierzu ist "am" Ausgleichsgetriebekorb ein linker und ein rechter Lagersitz für das linke bzw. das rechte Wälzlager vorgesehen.

Der Kern der Erfindung besteht darin, dass der linke und der rechte Lagersitz jeweils durch ein sich von dem Ausgleichsgetriebekorb unterscheidendes separates Bauteil gebildet ist. Im Unterschied zu herkömmlichen Achsgetrieben sind die beiden Lagersitze also nicht einstückig bzw. dauerhaft fest mit dem Ausgleichsgetriebekorb verbunden.

Vielmehr kann beim Einbau des Ausgleichsgetriebekorbs in das Achsge-triebegehäuse zunächst der Ausgleichsgetriebekorb ohne die beiden Lager-sitze in das Achsgetriebegehäuse eingeführt und in Position gebracht werden Nach der "Vorpositionierung" des Ausgleichsgetriebekorbs können die beiden Lagersitze an den Ausgleichsgetriebekorb "angefügt" werden. Die zum Einführen des Ausgleichsgetriebekorbs in das Achsgetriebegehäuse erforderliche Zugangsöffnung kann somit kleiner ausgeführt sein als bei herkömmlichen Achsgetriebegehäusen bzw. bei einer vorgegebenen Größe der Zugangsöffung vereinfacht sich der Einbau des Ausgleichsgetriebekorbs.

Für die Anordnung der beiden Lagersitze weist der Ausgleichsgetriebekorb aufeinander gegenüberliegenden Seiten jeweils eine Ausnehmung auf, in die ein "Kopplungsabschnitt" des linken bzw. rechten Lagersitzes eingesetzt ist. Bei einer ersten Variante der Erfindung haben die Ausnehmungen jeweils die Form eines sich zur Mitte des Ausgleichsgetriebekorbs hin verjüngenden Innenkonus'. Die Kopplungsabschnitte der die beiden Lagersitze bildenden Bauteile sind entsprechend komplementär gestalttet, d. h. sie haben in diesem Fall die Form eines Außenkonus.

Alternativ dazu können die Ausnehmungen und die Kopplungsabschnitte der die beiden Lagersitze bildenden Bauteile auch kreiszylindrisch gestaltet sein, wobei die beiden die Lagersitze bildenden Bauteile in die Ausnehmungen eingepresst sein können.

Um eine definierte Position der die Lagersitze bildenden zwei Bauteile in Bezug auf den Ausgleichsgetriebekorb zu erreichen, kann an den beiden Lagersitzen jeweils eine erste Anschlagfläche und an dem Ausgleichsgetriebekorb auf beiden Seiten jeweils eine mit der zugeordneten ersten Anschlagfläche zusammenwirkende zweite Anschlagfläche vorgesehen sind.

Bei einer Variante der Erfindung sind die beiden Wälzlager, über die der Ausgleichsgetriebekorb im Achsgetriebegehäuse gelagert ist, jeweils mit ihrem Innenring auf einem entsprechend dimensionierten Außenumfang des linken bzw. rechten Lagersitzes angeordnet.

Bei einer anderen Ausführungsform der Erfindung ist der Innenring der beiden Wälzlager jeweils unmittelbar durch einen zugeordneten Außenumfang des linken bzw. rechten Lagersitzes gebildet. Die beiden Lagersitze sind bei diesem Ausführungsbeispiel somit integraler Bestandteil des jeweiligen Wälzlagers.

Bei den Wälzlagern kann es sich beispielsweise um Schrägkugellager oder um Kegelrollenlager handeln, die in X-Anordnung angeordnet sind.

Im Folgenden wird die Erfindung im Zusammenhang mit der Zeichnung näher erläutert. Es zeigen:
- Figur 2: ein Ausführungsbeispiel gemäß der Erfindung wobei ein Teil des Achsgetriebegehäuses gezeigt ist; und
- Figur 3: zwei verschiedene Varianten gemäß der Erfindung.

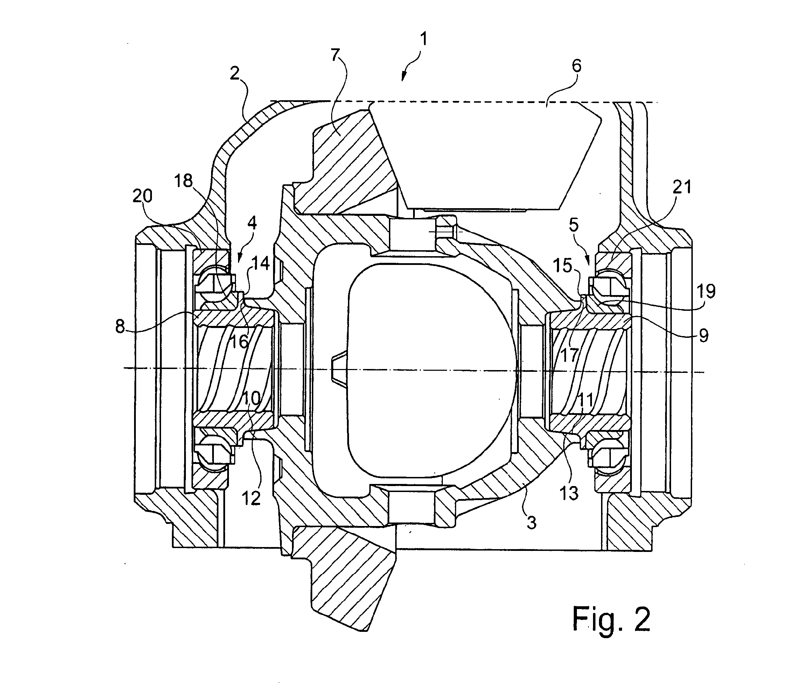

Figur 2 zeigt ein Achsgetriebe 1 mit einem Achsgetriebegehäuse 2, in dem drehbar ein Ausgleichsgetriebekorb 3 angeordnet ist. Details, wie die im Inneren des Ausgleichsgetriebekorbs 3 angeordneten Ausgleichsräder sowie Abtriebswelle, sind nicht dargestellt.

Der Ausgleichsgetriebekorb ist über ein linkes Schrägkugellager 4 und ein rechtes Schrägkugellager 5, die in X-Anordnung angeordnet sind, drehbar im Achsgetriebegehäuse 2 gelagert. Eine Antriebswelle treibt über ein Antriebskegelritzel 6 und ein Tellerrad 7, das fest mit dem Ausgleichsgetriebekorb 3 verbunden ist, das Ausgleichsgetriebe 1 an.

Im Unterschied zu dem in Figur 1 gezeigten Ausgleichsgetriebe nach dem Stand der Technik sind die beiden Wälzlager 4, 5 nicht unmittelbar auf dem Ausgleichsgetriebekorb 3 angeordnet. Vielmehr sind die Lagersitze der beiden Wälzlager 4, 5 durch separate Bauteile 8, 9 gebildet.

Wie aus Figur 2 ersichtlich ist, weist der Ausgleichsgetriebekorb 3 auf zwei einander gegenüberliegenden Seiten jeweils konisch zur Mitte des Ausgleichsgetriebes 1 hin zulaufende, innenkonusförmige Ausnehmungen 10 bzw. 11 auf. Die die beiden Lagersitze bildenden Bauteile 8, 9 weisen hierzu komplementär gestaltete Außenkonusabschnitte 12, 13 auf. Um eine definierte Position der Lagersitze in Bezug auf den Ausgleichsgetriebekorb zu erreichen, weisen die beiden die Lagersitze bildenden Bauteile 8, 9 und der Ausgleichsgetriebekorb 3 jeweils aneinander anliegende erste Anschlagflächen 14, 15 bzw. zweite Anschlagflächen 16, 17 auf.

Wie aus Figur 2 ersichtlich ist, sind Innenringe 18, 19 der beiden Wälzlager 4, 5 auf zugeordnete Außenumfänge der die Lagersitze bildenden 8 bzw. 9 aufgesetzt. Außenringe 20, 21 der beiden Wälzlager 4, 5 sind in zugeordnete Ausnehmungen des Achsgetriebegehäuses 2 eingesetzt.

Wie unmittelbar aus einem Vergleich des in Figur 2 dargestellten Achsgetriebes mit dem in Figur 1 dargestellten herkömmlichen Ausgleichsgetriebekorb ersichtlich ist, weist der Ausgleichsgetriebekorb des Ausführungsbeispiels der Figur 2 eine wesentlich geringere Breite auf als der in Figur 1 dargestellte Ausgleichsgetriebekorb. Bei der Montage des Achsgetriebes 1 kann somit zunächst der Ausgleichsgetriebekorb 3 in das Achsgetriebegehause 1 eingeführt und vorpositioniert werden. In einem weiteren Schritt können dann die beiden die Lagersitze bildenden Bauteile 8, 9 montiert werden. Zum Einführen des Ausgleichsgetriebekorbs 3 in das Achsgetriebegehäuse 1 wird somit eine geringer dimensionierte Zugangsöffnung benötigt als zum Einführen herkömmlicher Ausgleichsgetriebekörbe. Aufgrund der kompakteren Bauweise des Ausgleichsgetriebekorbs 3 kann dieser auch einfacher im Achsgetriebegehäuse 2 positioniert werden.

Figur 3 zeigt einen Ausgleichsgetriebekorb 3, bei dem das linke Wälzlager 4 in gleicher Weise angeordnet ist, wie beim Ausführungsbeispiel der Figur 2. Beim rechten Wälzlager 5 hingegen ist der "Innenring" 19 unmittelbar durch einen zugeordneten Außenumfang des den Lagersitz bildenden Bauteils 9 gebildet. Das Bauteil 9 ist also zugleich integraler Bestandteil des Schrägkugellagers 5.

Für die Montage des Achsgetriebes kann in dem Achsgetriebegehäuse 2 auf der dem Antriebsritzel 6 gegenüberliegenden Seite eine durch einen Gehäusedeckel verschlossene Zugangsöffnung vorgesehen sein. Alternativ dazu kann auch auf einer der beiden Seiten, d. h. dort, wo beim Ausführungsbeispiel der Figur 2 die beiden Wälzlager 4, 5 angeordnet sind, ein Gehäusedeckel vorgesehen sein, der einen Zugang ins Innere des Achsgetriebegehäuses 2 und somit eine Montage des Ausgleichsgetriebekorbs 3 ermöglicht.

## Patentansprüche

1. Achsgetriebe (1), mit
- einem Ausgleichsgetriebekorb (3),
- einem linken und einem rechten Wälzlager (4, 5), über die der Ausgleichsgetriebekorb (3) drehbar gelagert ist, wobei ein linker und ein rechter Lagersitz für das linke bzw. das rechte Wälzlager (4, 5) vorgesehen ist, und
- einem Achsgetriebegehäuse (2), in dem der Ausgleichsgetriebekorb (3) drehbar gelagert ist,
wobei
• der linke und der rechte Lagersitz am Ausgleichsgetriebekorb (3) angeordnet sind, derart, dass der linke und der rechte Lagersitz jeweils durch ein sich von dem Ausgleichsgetriebekorb (3) unterscheidendes, damit weder einstückig noch dauerhaft fest verbundenes, separates Bauteil (8, 9) gebildet ist,
**dadurch gekennzeichnet, dass**
• der Ausgleichsgetriebekorb auf einander gegenüberliegenden Seiten jeweils eine Ausnehmung (10, 11) aufweist, in die ein Kopplungsabschnitt des linken bzw. rechten Lagersitzes (8, 9) eingesetzt ist und
• die Ausnehmungen (10, 11) jeweils die Form eines sich zur Mitte des Ausgleichsgetriebekorbs (3) hin verjüngenden Innenkonus haben und die Kopplungsabschnitte die Form komplementär gestalteter Außenkonusse haben.

2. Achsgetriebe nach Anspruch 1, **dadurch gekennzeichnet, dass** die Ausnehmungen (10, 11) und die Kopplungsabschnitte kreiszylindrisch gestaltet sind und Presssitze bilden.

3. Achsgetriebe nach einem der Ansprüche 1 oder 2, **dadurch gekennzeichnet, dass** an den beiden Lagersitzen (8, 9) jeweils eine erste Anschlagfläche (14, 15) und an dem Ausgleichsgetriebekorb (3) mit den ersten Anschlagflächen (14, 15) zusammenwirkende zweite Anschlagflächen (16, 17) vorgesehen sind, so dass bei Anliegen der ersten an den zweiten Anschlagflächen (14, 15; 16, 17) ein definierter Presssitz der beiden Lagersitze (8, 9) in den Ausnehmungen (10, 11) des Ausgleichsgetriebekorbs (3) gegeben ist.

4. Achsgetriebe (1) nach einem der Ansprüche 1 bis 3, **dadurch gekennzeichnet, dass** die beiden Wälzlager (4, 5) jeweils einen Innenring (18, 19) aufweisen, wobei der Innenring (18, 19) des linken bzw. rechten Wälzlagers (4, 5) jeweils durch einen Außenumfang des linken bzw. rechten Lagersitzes (8, 9) gebildet ist.

5. Achsgetriebe (1) nach einem der Ansprüche 1 bis 3, **dadurch gekennzeichnet; dass** die beiden Wälzlager (4, 5) jeweils einen Innenring (18, 19) aufweisen, wobei der Innenring (18, 19) des linken und des rechten Wälzlagers (4, 5) auf einem Außenumfang des linken bzw. rechten Lagersitzes (8, 9) angeordnet ist.

6. Achsgetriebe nach einem der Ansprüche 1 bis 5, **dadurch gekennzeichnet, dass** die Wälzlager in X-Anordnung angeordnete Schrägkugellager oder Kegelrollenlager sind.

7. Achsgetriebe (1) nach einem der Ansprüche 1 bis 6, **dadurch gekennzeichnet, dass** das Achsgetriebegehäuse (2) eine durch einen Gehäusedeckel verschlossene Zugangsöffnung aufweist, wobei in das Achsgetriebegehäuse (2) eine als Antriebswelle für den Ausgleichsgetriebekorb (3) fungierende Ritzelwelle (6) ragt und zwei im Wesentlichen senkrecht zur Ritzelwelle (6) angeordnete Abtriebswellen auf einander gegenüberliegenden Seiten des Achsgetriebegehäuses (2) sich durch den linken bzw. rechten Lagersitz (8, 9) hindurch aus dem Ausgleichsgetriebekorb (3) heraus erstrecken.

8. Achsgetriebe (1) nach Anspruch 7, **dadurch gekennzeichnet, dass** der Gehäusedeckel auf einer der Ritzelwelle (6) abgewandten Seite des Achsgetriebegehäuses (2) angeordnet ist.

9. Achsgetriebe (1) nach Anspruch 8, **dadurch gekennzeichnet, dass** der Gehäusedeckel auf einer linken oder einer rechten Seite des Achsgetriebegehäuses (2) angeordnet ist, wobei sich die linke bzw. die rechte Abtriebswelle durch eine im Deckel vorgesehene Öffnung aus dem Achsgetriebe (1) heraus erstreckt.

## Claims

1. An axle gearbox (1) comprising:
- a compensating gearbox cage (3),
- a left and a right rolling bearing (4, 5), on which the compensating gearbox cage (3) is rotatably mounted, wherein a left and a right seat are provided for the left and the right rolling bearing (4, 5) respectively, and
- an axle gearbox casing (2) in which the cage (3) is rotatably mounted, wherein
• the left and the right bearing seat are disposed on the compensating gearbox cage (3), so that the left and the right bearing seat are each formed by a separate component (8, 9), differing from the compensating gearbox cage (3), i.e. not integral therewith or permanently and firmly connected thereto,
**characterised in that**
• the compensating gearbox cage, on each opposite side, has a recess (10, 11) for inserting a portion coupling the left and the right bearing seat (8, 9), and
• the recesses (10, 11) each have the shape of an inner cone tapering towards the middle of the compensating gearbox cage (3) and the coupling portions form complementary-shaped outer cones.

2. An axle gearbox according to claim 1, **characterised in that** the recesses (10, 11) and the coupling portions are circular cylindrical, and have interference fits.

3. An axle gearbox according to claim 1 or claim 2, **characterised in that** a first abutment surface (14, 15) is provided on the two respective bearing seats (8, 9) and second abutment surfaces (16, 17) co-operating with the first abutment surfaces (14, 15) are provided on the compensating gearbox cage (3) so that when the first abutment surfaces (14, 15) abut the second abutment surfaces (16, 17) a defined interference fit for the two seats (8, 9) is obtained in the recesses (10, 11) in the compensating gearbox cage (3).

4. An axle gearbox (1) according to any of claims 1 to 3, **characterised in that** the two rolling bearings (4, 5) each have an inner race (18, 19), wherein the inner race (18, 19) of the left or right rolling bearing (4, 5) is in each case formed by an outer periphery of the left or right bearing seat (8, 9).

5. An axle gearbox (1) according to any of claims 1 to 3, **characterised in that** the two rolling bearings (4, 5) each have an inner race (18, 19), wherein the inner races (18, 19) of the left and right rolling bearings (4, 5) are disposed on an outer periphery of the left or right bearing seat (8, 9) respectively.

6. An axle gearbox according to any of claims 1 to 5, **characterised in that** the rolling bearings are angular ball bearings or cone bearings disposed in an X arrangement.

7. An axle gearbox according to any of claims 1 to 6, **characterised in that** the axle gearbox casing (2) has an access opening closed by a cover, wherein a pinion shaft (6) serving as a drive shaft for the compensating gearbox cage (3) projects into the axle gearbox casing (2) and two driven shafts disposed substantially at right angles to the pinion shaft (6) on opposite sides of the axle gearbox casing (2) extend out of the compensating gearbox cage (3) through the left or right bearing seat (8, 9).

8. An axle gearbox (1) according to claim 7, **characterised in that** the cover is disposed on a side of the axle gearbox casing (2) remote from the pinion shaft (6).

9. An axle gearbox (1) according to claim 8, **characterised in that** the cover is disposed on a left or a right side of the axle gearbox casing (2), wherein the left or right driven shaft extends out of the axle gearbox (1) through an opening in the cover.

## Revendications

1. Transmission d'essieu (1) comprenant :
- une cage de différentiels (3),
- un palier à roulement gauche et droit (4, 5) par les quels la cage de différentiel (3) est montée à rotation, avec un siège de palier gauche et droit pour le palier à roulement gauche et droit (4, 5), et
- un boîtier de transmission d'essieu (2) recevant à rotation la cage de différentiel (3),
- le siège de palier gauche et droit de la cage de différentiel (3) étant tel que le siège de palier gauche et droit sont constitués chacun par un composant distinct (8, 9) différent de la cage de différentiel (3) en étant ni réunis en une seule pièce avec celle-ci ni relié de manière permanente,
transmission **caractérisée en ce que**
- la cage de différentiel ayant sur des côtés opposés, chaque fois une cavité (10, 11) qui reçoit un segment de couplage du siège de palier gauche ou droit (8, 9), et
- les cavités (10, 11) ont chacune la forme d'un cône rentrant allant en diminuant vers le milieu de la cage de différentiel (3) et les segments de couplage ont la forme de cônes extérieurs complémentaires.

2. Transmission d'essieu selon la revendication 1,
**caractérisée en ce que**
les cavités (10, 11) et les segments de couplage sont cylindriques de section, circulaire et ils constituent des sièges pressés.

3. Transmission d'essieu selon l'une des revendications 1 ou 2,
**caractérisée en ce que**
les deux sièges de palier (8, 9) ont chacun une première surface de fixation (14, 15) ainsi qu'une seconde surface de fixation (16, 17) coopérant avec la première surface de fixation (14, 15) de façon que lorsque la première surface de fixation s'applique contre la seconde surface de fixation (14, 15 ; 16, 17) on a un siège pressé, défini, entre les deux sièges de palier (8, 9) dans les cavités (10, 11) de la cage de différentiel (3).

4. Transmission d'essieu (1) selon l'une des revendications 1 à 3,
**caractérisée en ce que**
les deux paliers de roulement (4, 5) ont chacun une bague intérieure (18, 19),
la bague intérieure (18, 19) du palier à roulement gauche ou droit (4, 5) étant formée par la périphérie extérieure respective du siège de palier gauche ou droit (8, 9).

5. Transmission d'essieu (1) selon l'une des revendications 1 à 3,
**caractérisée en ce que**
les deux paliers de roulement (4, 5) ont chacun une bague intérieure (18, 19),
- la bague intérieure (18, 19) du palier de roulement gauche et droit (4, 5) étant logée dans la périphérie extérieure du siège de palier gauche ou droit (8, 9).

6. Transmission d'essieu selon l'une des revendications 1 à 5,
**caractérisée en ce que**
les paliers de roulement sont des paliers à billes en biais ou des paliers à rouleaux coniques disposés en X.

7. Transmission d'essieu (1) selon l'une des revendications 1 à 6,
**caractérisée en ce que**
le boîtier (2) de la transmission d'essieu comporte un orifice d'accès fermé par un couvercle,
- le boîtier de transmission d'essieu (2) recevant un arbre de pignon (6) fonctionnant comme arbre d'entraînement de la cage de différentiel (3) et deux arbres de sortie pratiquement perpendiculaires à l'arbre de pignon (6) sur les côtés opposés du boîtier de transmission d'essieu (2), traversant le siège de palier gauche ou droit (8, 9) pour sortir de la cage de différentiel (3).

8. Transmission d'essieu (1) selon la revendication 7,
**caractérisée en ce que**
le couvercle du boîtier est prévu sur le côté du boîtier (2) à l'opposé de celui de l'arbre de pignon (6).

9. Transmission d'essieu (1) selon la revendication 8,
**caractérisée en ce que**
le couvercle du boîtier est prévu sur le côté gauche ou le côté droit du boîtier de transmission d'essieu (2), l'arbre de sortie gauche ou droit sortant de la transmission d'essieu (1) par une ouverture dans le couvercle.
